# EUROPÄISCHE PATENTANMELDUNG

(11) **EP 2 061 136 A1**
(43) Veröffentlichungstag der Anmeldung: **20.05.2009**
(21) Anmeldenummer: 07022398.7
(22) Anmeldetag: 19.11.2007
(51) Int. Cl.: H02K 7/14, H02K 21/24

(54) **Elektrischer Direktantrieb für eine Walze**

(71) Anmelder: SIEMENS AKTIENGESELLSCHAFT, 80333 München (DE)
(72) Erfinder: Hoffmann, Holger, 91093 Heßdorf (DE); Schiele, Stefan, 85247 Stetten (DE); Schultheiss, Roland, 91052 Erlangen (DE); Wolter, Wolfgang, 85241 Herbertshausen (DE)

(57) **Zusammenfassung**

Die Erfindung betrifft einen elektrischen Walzenantrieb (10), welcher mit einer Walze (3) verbindbar ist, wobei der elektrische Walzenantrieb (10) als Scheibenmotor mit einem scheibenförmigen Sekundärteil (13) und einem scheibenförmigen Primärteil (11) ausgebildet ist.

## Beschreibung

Die Erfindung betrifft einen elektrischen Walzenantrieb, welcher mit einer Walze verbindbar ist.

Für das Antreiben einer Walze in einer Produktionsmaschine, beispielsweise einer kontinuierlichen Presse für Holzwerkstoffe, werden Direktantriebe mit hohen Drehmomenten bzw. Gesamtleistungen bei niedrigen Drehzahlen benötigt. Derzeit wird u.a. ein möglichst einfacher Umstieg von einer aktuellen Antriebsvariante (Antrieb und Getriebe) auf Direktantriebstechnik angestrebt. Hierfür wird eine Lösung benötigt, mit der das gegebene Leistungsspektrum der betrachteten Produktionsmaschine ohne Wegfall von Leistungsstufungen und Maschinengrößen der Produktionsmaschine realisiert werden kann. Es sind daher Direktantriebe erforderlich, die zum einen den Platzbedarf der bisherigen Lösung nicht überschreiten und zum anderen möglichst flexibel an die geforderten Drehmomentabstufungen der bisherigen Produktionsmaschinen angepasst werden können.

Bisherige Konzepte zum Antreiben einer Walze in einer Produktionsmaschine basieren auf einem Aufbau bestehend aus einem oder mehreren Elektromotoren, welche über ein zwischengeschaltetes Getriebe die geforderten Drehmomente und Drehzahlen auf die Welle der Walze bzw. die Walze übertragen. Die unterschiedlichen Drehmomente an der Walze werden durch eine veränderbare Anzahl verwendeter Elektromotoren ermöglicht. Die Höhe der geforderten Drehmomente wird über hohe Drehzahl/Drehmomentübersetzungen des Getriebes erreicht. Je nach geforderter Leistungsstufe, d.h. gefordertem Antriebsmoment der Walze, kommen unterschiedliche Getriebe bzw. unterschiedliche elektrische Antriebe (Elektromotoren) zum Einsatz. Derartige Antriebskonzepte verursachen hohe Entwicklungskosten für geometrisch und leistungstechnisch speziell angefertigte Sondermotoren im Bereich der Direktantriebstechnik und technischen, finanziellen und zeitlichen Aufwand beim Austausch beschädigter Getriebe.

Aufgabe der vorliegenden Erfindung ist es, einen elektrischen Antrieb für eine Walze bereitzustellen, welcher die genannten Nachteile vermeidet und welcher einfach und kostengünstig auch bei geringen Stückzahlen herstellbar ist. Eine weitere Aufgabe der Erfindung ist es, einen derartigen elektrischen Walzenantrieb für eine Produktionsmaschine bereitzustellen.

Die Aufgabe wird durch die Merkmale der Patentansprüche 1 und 10 gelöst. Vorteilhafte Weiterbildungen sind den abhängigen Patentansprüchen zu entnehmen.

Die Lösung der Aufgabe gelingt durch den Einsatz eines elektrischen Walzenantriebs, welcher als Scheibenmotor ausgebildet und mit einer Walze verbindbar ist. Erfindungsgemäß ist der Scheibenmotor als Direktantrieb zur Anbindung an eine Walze ausgebildet.

Die Konstruktionsart des Scheibenmotors mit axialem Luftspalt als Sonderbauform einer elektrischen Maschine ist allgemein bekannt. Es hat sich herausgestellt, dass ein Scheibenmotor für das Antreiben einer Walze einer Produktionsmaschine sehr gut geeignet ist.

Der Scheibenmotor, der für das Antreiben einer Walze eingesetzt werden kann, weist ein scheibenförmiges Sekundärteil und ein scheibenförmiges Primärteil auf. In einer bevorzugten Ausführungsform der Erfindung ist eines dieser beiden Teile, entweder das Sekundärteil oder das Primärteil, direkt an der Walze angeordnet. Beispielsweise ist das Sekundärteil als rotatorisches Bauteil (Rotor) ausgebildet und direkt an einer Stirnseite der zylinderförmigen Walze angeordnet. Das Primärteil ist in diesem Fall als Stator ausgebildet und stationär gegenüberliegend dem Sekundärteil angeordnet. Das vom Direktantrieb erzeugte Drehmoment wird somit direkt auf die Walze übertragen.

In einer weiteren Ausgestaltung der Erfindung weist die Walze eine Antriebswelle auf, wobei die Antriebswelle unmittelbar mit der Walze verbunden ist und das Sekundärteil an der Antriebswelle der Walze angeordnet ist. Das Sekundärteil ist somit nicht direkt an der Walze selbst, sondern an der Welle der Walze angeordnet, was aufgrund einer vorgegebenen Einbausituation sinnvoll sein kann. Das dazugehörige Primärteil ist zwecks Drehmomentabstützung an einem Maschinengestell stationär befestigt.

Ein Scheibenmotor lässt eine variable und präzise Anpassung an das für die jeweilige Größe bzw. Leistungsstufe der Walze bzw. der Produktionsmaschine notwendige Drehmoment zu. Ferner kann der Antrieb leicht an den zur Verfügung stehenden Bauraum angeglichen werden. Die variable Gestaltung des abzugebenden Drehmomentes ist mit dem Scheibenmotor auf unterschiedlichen Wegen realisierbar.

Vorzugsweise weist das Sekundärteil mehrere gebogene oder gerade Sekundärteilelemente auf. Das Sekundärteil ist dabei so aufbaubar, dass auf einer Grundscheibe eine verschiedene Anzahl von Sekundärteilelementen angeordnet werden kann. Dabei können entsprechend der geforderten Leistung mehr oder weniger Sekundärteilelemente angeordnet werden. Das Sekundärteil kann aber auch so ausgestaltet sein, dass die Sekundärteilelemente zusammen selbst die Scheibe ergeben. In diesem Fall ist die maximale Anzahl von Sekundärteilelementen anzuordnen, um eine geschlossene Scheibe, insbesondere einen geschlossenen Ring, mittels der Sekundärteilelemente auszubilden. Als Sekundärteilelemente können vorteilhafterweise Komponenten von Standard-Linearmotoren verwendet werden. Somit kann einfach und kostengünstig ein Sekundärteil bereitgestellt werden.

Da das Sekundärteil vorzugsweise als Rotor verwendet wird, weisen die Sekundärteileelemente eine vorgebbare Anzahl an Permanentmagneten auf. Jedes einzelne Sekundärteilelement weist beispielsweise drei Permanentmagnete auf, wobei die Permanentmagnete selbst ein- oder mehrteilig aufgebaut sein können. Auch hier kann je nach gewünschter Leistungsdichte die Anzahl der Permanentmagnete je Sekundärteilelement variiert werden.

Das scheibenförmige Primärteil weist ebenso mehrere gebogene oder gerade Primärteilelemente auf, wobei jedes Primärteilelement eine ein- oder mehrphasige Wicklung aufweist. Die Primärteilelemente sind in einem bestimmten Abstand und Winkel zueinander ringförmig bzw. kreisförmig an einer Grundplatte angeordnet. Je nach gewünschter Leistungsdichte bzw. gewünschtem Drehmoment werden mehr oder weniger Primärteilelemente angeordnet. Jedes Primärteil weist vorzugsweise eine mehrphasige, insbesondere dreiphasige, Wicklung zum Anschluss an einen Drehstromnetz auf. Der Vorteil der Verwendung von geraden Primärteilelementen besteht darin, dass hier herkömmliche Primärteile von Standard-Linearmotoren verwendet werden können. Diese sind kostengünstig und es kann einfach ein Primärteil bereitgestellt werden. Gebogene Primärteilelemente dagegen bieten den Vorteil, dass eine Ringstruktur bzw. eine Kreisstruktur besser nachgebildet werden kann.

Scheibenförmiges Primärteil und scheibenförmiges Sekundärteil sind gegenüberliegend in axialer Richtung nebeneinander angeordnet und bilden einen scheibenförmigen bzw. ringförmigen Luftspalt aus. Im Gegensatz zu herkömmlichen elektrischen Maschinen, in welchen die elektromagnetischen Felder bzw. Kräfte in radialer Richtung wirken, bilden sich die elektromagnetischen Felder und Kräfte bei einem Scheibenmotor in axialer Richtung aus.

Ein Scheibenmotor bietet den Vorteil, dass das Drehmoment bzw. die Leistungsdichte des Scheibenmotors einfach variabel einstellbar ist. Zum einen kann hier der Luftspalt zwischen Sekundärteil und Primärteil, welcher senkrecht zur angetriebenen Walze verläuft, verschieden breit ausgebildet sein. Ist der Luftspalt sehr eng bzw. klein ausgebildet, ist eine höhere Leistung bzw. ein höheres Drehmoment übertragbar. Je größer der Luftspalt zwischen Primärteil und Sekundärteil ausgebildet ist, desto geringer wird die Übertragung des Drehmoments auf die Walze sein.

Weiterhin ist das Drehmoment dadurch variabel einstellbar, dass mehr oder weniger Primärteilelemente bzw. Sekundärteilelemente am Primärteil bzw. Sekundärteil angeordnet sind.

In einer weiteren Ausgestaltung der Erfindung können an der Antriebswelle der Walze auch mehrere mit Primär- bzw. Sekundärteilelementen bestückte Trägerscheiben als Sekundärteile und/oder Primärteile angeordnet sein.

Erfindungsgemäß ist vorgesehen, einen elektrischen Walzenantrieb für eine Produktionsmaschine zu verwenden. Insbesondere ist eine solche Produktionsmaschine eine kontinuierliche Presse für Holzwerkstoffe.

Der elektrische Walzenantrieb in Form eines Scheibenmotors ist dabei nicht nur in einer kontinuierlichen Presse für Holzwerkstoffe, sondern ebenso in anderen Produktionsmaschinen oder Anlagen mit elektrischen Antrieben, einsetzbar.

Durch die Verwendung eines Scheibenmotors in einer kontinuierlichen Presse für Holzwerkstoffe, oder auch in anderen Produktionsmaschinen, ergeben sich Vorteile gegenüber bisher eingesetzten Motor-Getriebe-Lösungen. Es ist eine einfache Abstimmung auf das geforderte Drehmoment der Produktionsmaschine möglich, wobei insbesondere eine hochpräzise Anpassung des Scheibenmotors an das geforderte Drehmoment realisierbar ist. Weiterhin beansprucht ein Scheibenmotor geringen Raum bzw. Platz, wobei die Geometrie des Scheibenmotors an räumliche Einbaubedingungen der Walze optimal anpassbar ist. Auch ist mit dem beschriebenen Konzept ein modularer Aufbau eines Direktantriebs möglich, so dass Entwicklungskosten für geometrisch und leistungstechnisch speziell angefertigte Sondermotoren im Bereich der Direktantriebstechnik entfallen. Es entfallen die Kosten für eine Wartung eines Getriebes und es entfallen mechanische Schwingungen an der Walze infolge des Getriebes. Die Montage, Demontage und Projektierung der Antriebe an der Walze der kontinuierlichen Presse werden vereinfacht.

In der nachfolgenden Beschreibung werden weitere Merkmale und Einzelheiten der Erfindung im Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine Produktionsmaschine mit einem erfindungsgemäßen Walzenantrieb in einer schematischen Darstellung,
- FIG 2: eine erste Ausgestaltung eines scheibenförmigen Primärteils,
- FIG 3: eine zweite Ausgestaltung eines scheibenförmigen Primärteils,
- FIG 4: eine Ausgestaltung eines scheibenförmigen Sekundärteils,
- FIG 5: eine erste Ausgestaltung für eine maschinentechnische Anbindung eines elektrischen Walzenantriebs an eine Walze,
- FIG 6: eine zweite Ausgestaltung für eine maschinentechnische Anbindung eines elektrischen Walzenantriebs an eine Walze, und
- FIG 7: eine dritte Ausgestaltung für eine maschinentechnische Anbindung eines elektrischen Walzenantriebs an eine Walze.

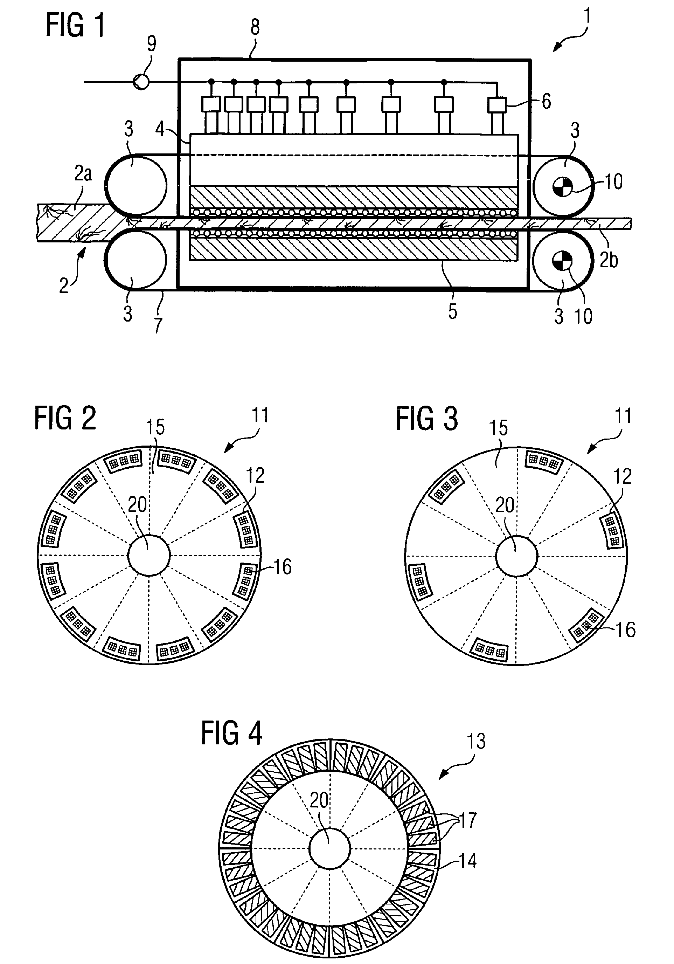

FIG 1 zeigt eine Produktionsmaschine 1, wobei die Produktionsmaschine 1 eine kontinuierliche Presse für Holzwerkstoffe ist. Die Produktionsmaschine 1 weist vier Walzen 3 auf, welche durch stetiges oder schrittweises Druckumformen das Walzgut 2 bearbeiten. Das Walzgut ist insbesondere Holz, wobei das Bezugszeichen 2a das Walzgut bzw. das Werkstück im Ausgangszustand zeigt. Das Bezugszeichen 2b zeigt das Walzgut als Produkt im Endzustand. Mit einer derartigen kontinuierlichen Presse für Holzwerkstoffe werden beispielsweise Pressplatten oder Holzspanplatten hergestellt.

Die Pressplatte 4 und der Presstisch 5 formen das Walzgut zusammen mit den Walzen 3 um. Die Pressplatte 4 wird mit den Presszylindern 6 angetrieben. Solche Presszylinder 6 sind beispielsweise hydraulisch oder pneumatisch ausgeführt. Zwei von den vier Walzen 3 werden mittels elektrischer Walzenantriebe 10 angetrieben, wobei das Drehmoment mittels eines Stahlbandes 7 auf die anderen zwei Walzen 3 übertragen wird. Die Presszylinder 6 werden über eine Leitung sowie eine Pumpe 9 mit beispielsweise Öl versorgt. Ferner ist ein Gehäuse 8 dargestellt, welches das Gehäuse der Produktionsmaschine 1 bildet. Die Darstellung gemäß FIG 1 ist nur schematisch, so dass nur das grundlegende Prinzip einer kontinuierlichen Presse für Holzwerkstoffe zu sehen ist.

FIG 2 zeigt ein scheibenförmiges Primärteil 11, welches eine Trägerplatte oder auch Basisplatte 15 aufweist. An der Trägerplatte 15 sind mehrere gebogene Primärteilelemente bzw. - segmente 12 angeordnet. In dem Ausführungsbeispiel gemäß FIG 2 sind beispielsweise zwölf Primärteilelemente 12 angeordnet. Jedes Primärteilelement 12 weist eine separate dreiphasige Wicklung 16 auf, welche insbesondere mittels Zahnspulen, auch Polspulen genannt, gebildet ist. Nach FIG 2 ist die dem Scheibenradius entsprechende maximale Anzahl von Primärteilsegmenten 12 auf der Trägerplatte 15 angeordnet. Anstatt der gebogenen Primärteilsegmente 12 könnten aber auch gerade Primärteilsegmente angeordnet sein, wie sie von herkömmlichen Linearmotoren bekannt sind. In der Mitte des Primärteils 11 ist die Aussparung 20 zu sehen, so dass das Primärteil 11 an einer Welle anordenbar ist.

FIG 3 zeigt eine weitere Ausgestaltung für ein Primärteil 11. In FIG 3 ist gut zu erkennen, dass eine geringere Anzahl an Primärteilsegmenten bzw. Primärteilelementen 12 an der Trägerplatte 15 angeordnet ist. Gemäß dem Ausführungsbeispiel nach FIG 3 sind beispielsweise sechs Primärteilelemente 12 angeordnet, so dass im Gegensatz zu FIG 2 die Hälfte der dem Scheibenradius entsprechenden maximalen Anzahl von möglichen Primärteilelementen 12 vorgesehen ist. Im Gegensatz zu FIG 2 ist somit das erzeugbare Drehmoment bzw. die erzeugbare Leistung um ca. 50% reduziert. Durch die Verwendung von einzelnen Primärteilelementen 12 kann somit je nach gewünschter Leistungsdichte bzw. nach gewünschtem Drehmoment die Anzahl von Primärteilelementen 12 variiert werden.

FIG 4 zeigt eine Ausführungsform für ein Sekundärteil 13. Das Sekundärteil 13 weist mehrere Sekundärteilelemente 14 auf. Insgesamt sind zwölf Sekundärteilelemente 14 zu sehen. Die Sekundärteilelemente 14 bilden aneinandergefügt einen Ring bzw. einen Kreis. Es ist sinnvoll, möglichst einen geschlossenen Ring bzw. Kreis mittels der Sekundärteilelemente 14 auszubilden. Andernfalls würde ein unerwünscht hohes Nutrastmoment aufgrund von zu großen Abständen zwischen den Sekundärteilelementen 14 entstehen. Die Sekundärteilelemente 14 können einerseits ebenfalls auf einer Trägerplatte angeordnet sein. Alternativ kann ein durch die Sekundärteilelemente 14 gebildeter Ring mittels Streben oder Stangen an einem (nicht gezeigten) Lager an der Aussparung 20 gelagert werden.

Jedes Sekundärteilelement 14 weist beispielsweise drei Permanentmagnete 17 auf, wobei jeder Permanentmagnet 17 ein- oder mehrteilig aufgebaut sein kann. Jeder Permanentmagnet 17 ist quaderförmig ausgebildet und die Permanentmagnete 17 sind in einem bestimmten Winkel zueinander angeordnet, insbesondere derart, dass eine kreisförmige Anordnung nachgebildet ist.

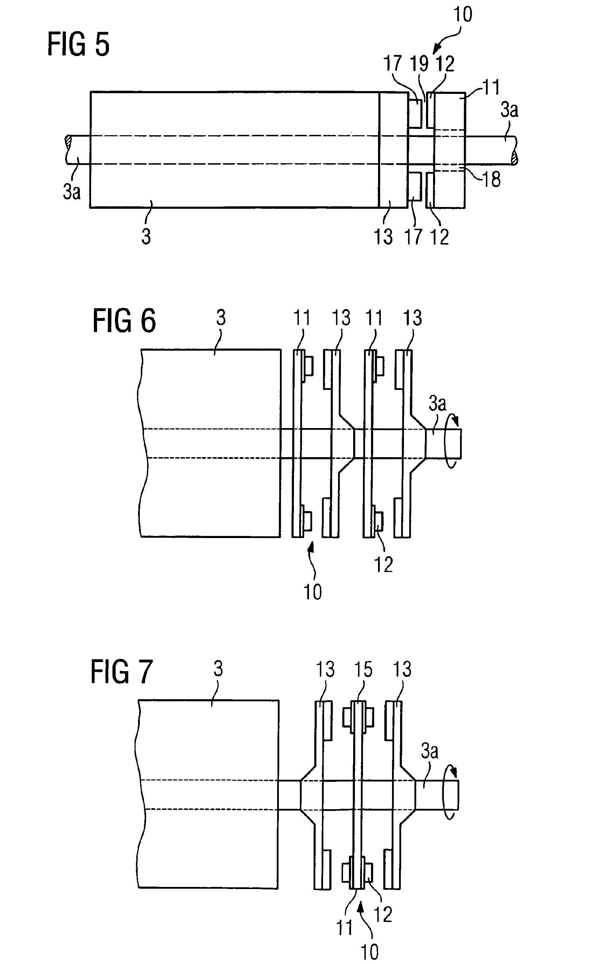

FIG 5 zeigt eine erste Ausgestaltung einer maschinentechnischen Anbindung des elektrischen Walzenantriebs 10 an eine Walze 3. Die Walze 3 ist an einer Antriebswelle 3a angeordnet. Der elektrische Walzenantrieb 10 ist als Scheibenmotor ausgebildet und weist das scheibenförmige Primärteil 11 und das scheibenförmige Sekundärteil 13 auf, welche durch einen scheibenförmigen bzw. ringförmigen Luftspalt 19 voneinander beabstandet sind. Die elektromagnetischen Kräfte bzw. Felder wirken in axialer Richtung parallel zur Antriebswelle 3a zwischen Primärteil 11 und Sekundärteil 13. Am Sekundärteil 13 sind Permanentmagnete 17 angeordnet und am Primärteil 11 sind Primärteilelemente 12 angeordnet.

Das Sekundärteil 13 ist als bewegtes Bauteil ausgeführt, d.h. als Rotor, und ist direkt mit der Walze 3 verbunden, d.h. direkt an einer Stirnseite der Walze 3 angeordnet. Das Sekundärteil 13 kann beispielsweise form-, kraft- oder stoffschlüssig an der Walze befestigt sein. Beispielsweise ist das Sekundärteil 13 angeschraubt oder mit der Walze 3 verschweißt oder verklebt. Durch eine derartige Anordnung des Sekundärteils 13 an die Walze 3 wird das Drehmoment direkt auf die Walze 3 übertragen. Das Primärteil 11 ist als stationäres Teil, d.h. als Stator, ausgebildet und ist an der Welle 3a angeordnet. Das Primärteil 11 ist mittels einer Lagerung 18 angeordnet, welche beispielsweise als Wälzlager oder Gleitlager ausgebildet sein kann. Das stationäre Primärteil 11 ist an einer weiteren stationären Komponente zu lagern, was jedoch nicht gezeigt ist. Beispielsweise ist eine Anbindung des Primärteils mittels Drehmomentstützen an einem Gehäuseteil einer Produktionsmaschine möglich.

FIG 6 zeigt eine weitere Ausgestaltung einer maschinentechnischen Anbindung eines elektrischen Walzenantriebs 10 an einer Walze 3. Gemäß dieser Ausführungsform sind praktisch zwei elektrische Antriebe 10 an der Welle 3a angeordnet. Es sind zwei Primärteile 11 und zwei Sekundärteile 13 axial nebeneinander angeordnet. Auf diese Art und Weise wird das Drehmoment, welches an die Antriebswelle 3a der Walze 3 übertragen wird, verdoppelt. Je nach gewünschter Leistung bzw. nach gewünschtem Drehmoment können beliebig viele Scheibenmotoren als elektrische Antriebe angeordnet werden.

FIG 7 zeigt eine weitere Ausführungsform einer Anordnung eines elektrischen Walzenantriebs 10. Gemäß dieser Ausführungsform ist der elektrische Antrieb 10 als sogenannte Doppelkammanordnung ausgeführt. Es ist ein Primärteil 11 an der Welle 3a angeordnet, wobei auf jeder Seite der Trägerplatte 15 Primärteilelemente 12 angeordnet sind. Auf beiden Seiten des Primärteils 11 ist jeweils ein Sekundärteil 13 angeordnet, welche an einem Gehäuse oder einer Maschinenkonstruktion stationär gelagert sind.

Es ist ebenso möglich, dass ein Sekundärteil 13 beidseitig mit Sekundärteilelementen 14 bestückt und fest mit der Antriebswelle 3a verbunden ist. Auf beiden Seiten des Sekundärteils 13 sind entsprechende bestückte Primärteile 11 über ein Gehäuse, welches beide Primärteile 11 verbindet, stationär gegenüber dem Sekundärteil 13, mit einer Maschinenkonstruktion verbunden.

## Patentansprüche

1. Elektrischer Walzenantrieb (10), welcher mit einer Walze (3) verbindbar ist, wobei der elektrische Walzenantrieb (10) als Scheibenmotor mit einem scheibenförmigen Sekundärteil (13) und einem scheibenförmigen Primärteil (11) ausgebildet ist.

2. Elektrischer Walzenantrieb (10) nach Anspruch 1, wobei das Sekundärteil (13) oder das Primärteil (11) direkt an der Walze (3) angeordnet ist.

3. Elektrischer Walzenantrieb (10) nach Anspruch 1 oder 2, wobei das Sekundärteil (13) oder das Primärteil (11) an einer Antriebswelle (3a) der Walze (3) angeordnet ist.

4. Elektrischer Walzenantrieb (10) nach einem der vorhergehenden Ansprüche, wobei das Sekundärteil (13) mehrere gebogene oder gerade Sekundärteilelemente (14) aufweist.

5. Elektrischer Walzenantrieb (10) nach Anspruch 4, wobei die Sekundärteilelemente (14) eine vorgebbare Anzahl quaderförmiger Permanentmagnete (17) aufweisen

6. Elektrischer Walzenantrieb (10) nach einem der vorhergehenden Ansprüche, wobei das Primärteil (11) mehrere gebogene oder gerade Primärteilelemente (12) aufweist und jedes Primärteilelemente (12) eine ein- oder mehrphasige Wicklung aufweist.

7. Elektrischer Walzenantrieb (10) nach einem der vorhergehenden Ansprüche, wobei ein Drehmoment des Walzenantriebs (10) variabel einstellbar ist.

8. Elektrischer Walzenantrieb (10) nach Anspruch 7, wobei zwischen Sekundärteil (13) und Primärteil (11) ein Luftspalt (19) ausgebildet ist, welcher senkrecht zur angetriebenen Walze (3) ausgebildet ist, wobei Sekundärteil (13) und Primärteil (11) in einem vorgebbaren Abstand zueinander anordenbar sind.

9. Elektrischer Walzenantrieb (10) nach Anspruch 7, wobei an der Antriebswelle (3a) der Walze (3) mehrere Sekundärteile (13) und/oder Primärteile (11) angeordnet sind.

10. Verwendung eines elektrischen Walzenantriebs (10) für eine Produktionsmaschine, wobei der Walzenantrieb (10) nach einem oder mehreren der Ansprüche 1 bis 9 ausgebildet ist.

11. Verwendung eines elektrischen Walzenantriebs (10) nach Anspruch 10, wobei die Produktionsmaschine eine kontinuierliche Presse für Holzwerkstoffe ist.
